# EUROPÄISCHE PATENTANMELDUNG

(11) **EP 3 709 393 A1**
(43) Veröffentlichungstag der Anmeldung: **16.09.2020**
(21) Anmeldenummer: 19161802.4
(22) Anmeldetag: 11.03.2019
(51) Int. Cl.: H01M 2/34, H01M 2/10

(54) **BATTERIESICHERUNG**

(71) Anmelder: Hilti Aktiengesellschaft, 9494 Schaan (LI)
(72) Erfinder: Richter, Rene, 86199 Augsburg (DE); Guggemos, Andreas, 86825 Bad Wörishofen (DE); Nitzschner, Michael, 86156 Augsburg (DE)
(74) Vertreter: Hilti Aktiengesellschaft Corporate Intellectual Property

(57) **Zusammenfassung**

Akkumulator, insbesondere zur Versorgung einer Werkzeugmaschine mit elektrischer Energie, mit einem Gehäuse zum Aufnehmen wenigstens einer Energiespeicherzelle sowie einer Plusleitung und einer Minusleitung zum Verbinden der wenigstens einen Energiespeicherzelle mit einer Schnittstelleneinrichtung.

Der Akkumulator enthält wenigstens eine Überstromschutzeinrichtung in der Plusleitung oder in der Minusleitung.

## Beschreibung

Die vorliegende Erfindung betrifft einen Akkumulator, insbesondere zur Versorgung einer Werkzeugmaschine mit elektrischer Energie, mit einem Gehäuse zum Aufnehmen wenigstens einer Energiespeicherzelle sowie einer Plusleitung und einer Minusleitung zum Verbinden der wenigstens einen Energiespeicherzelle mit einer Schnittstelleneinrichtung.

Auf dem Markt erhältliche Akkumulatoren, auch Akku genannt, enthalten für gewöhnlich eine Vielzahl an Energiespeicherzellen, auch Akkuzellen genannt, die zum Speichern sowie zur Abgabe von elektrischer Energie dienen. Das Gehäuse des Akkumulators besteht gewöhnlich aus einer relativ harten Kunststoffschale. Bei dem harten Kunststoff kann es sich beispielsweise um Polyamid, Polycarbonat oder dergleichen handeln.

Moderne Akkumulatoren werden zunehmend immer leistungsstärker und weissen stetig steigende Kapazitäten (in Amperestunden, Ah) auf. Um die Sicherheit mit dem Umgang dieser Akkumulatoren zu gewährleisten bzw. weiter zu erhöhen werden für gewöhnlich umfangreiche und komplexe Maßnahmen ergriffen.

Es ist die Aufgabe der vorliegenden Erfindung, das vorstehend genannte Problem zu lösen und einen Akkumulator mit einer erhöhten Sicherheit bereit zu stellen.

Diese Aufgabe wird gelöst durch den Gegenstand des Anspruchs 1 sowie insbesondere durch einen Akkumulator, insbesondere zur Versorgung einer Werkzeugmaschine mit elektrischer Energie, mit einem Gehäuse zum Aufnehmen wenigstens einer Energiespeicherzelle sowie einer Plusleitung und einer Minusleitung zum Verbinden der wenigstens einen Energiespeicherzelle mit einer Schnittstelleneinrichtung.

Erfindungsgemäß enthält der Akkumulator wenigstens eine Überstromschutzeinrichtung in der Plusleitung oder in der Minusleitung enthalten ist.

Die Überstromschutzeinrichtung kann auch als Sicherung, elektrische Sicherung oder OCP (= Over Current Protection) bezeichnet werden.

Entsprechend einer vorteilhaften Ausführungsform der vorliegenden Erfindung ist es möglich, dass wenigstens eine Überstromschutzeinrichtung sowohl in der Plusleitung als auch in der Minusleitung enthalten ist. Hierdurch kann die Sicherheit des Akkumulators weiter erhöht werden.

Gemäß einer vorteilhaften Ausführungsform der vorliegenden Erfindung kann es möglich sein, dass wenigstens zwei parallel zueinander angeordnete Überstromschutzeinrichtungen in der Plusleitung oder in der Minusleitung enthalten sind. Durch die spezielle Anordnung bzw. Erhöhung der Anzahl an Überstromschutzeinrichtungen kann die Sicherheit des Akkumulators weiter gesteigert werden.

Entsprechend einer vorteilhaften Ausführungsform der vorliegenden Erfindung ist es möglich, dass die Überstromschutzeinrichtung als Schmelzsicherung ausgestaltet ist.

Die Überstromschutzeinrichtung kann beispielsweise als Schmelzsicherung, elektronische Sicherung, SMD (Surface-mounted device), selbstrückstellende Sicherung, Leitungsschutzschalter oder als elektrischer Widerstand ausgestaltet sein. Des Weiteren kann die Überstromschutzeinrichtung auch als Verjüngung in einem Zellverbinder und/oder als Verjüngung eines stromführenden Pfads auf einer Leiterplatte ausgestaltet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine seitliche Ansicht auf einer Werkzeugmaschine in Form eines Akkuschraubers verbunden mit einem Akkumulator;
- Figur 2: eine seitliche Schnittansicht auf den Akkumulator mit einer ersten und zweiten Reihe von Energiespeicherzellen, einer Steuerungseinrichtung, einer Schnittstelleneinrichtung, einer ersten Überstromschutzeinrichtung in der Plusleitung und einer zweiten Überstromschutzeinrichtung in der Minusleitung;
- Figur 3: eine perspektivische Ansicht durch das Gehäuse des Akkumulators mit einer ersten und zweiten Reihe von Energiespeicherzellen, einer Schnittstelleneinrichtung, einer ersten Überstromschutzeinrichtung in der Plusleitung und einer zweiten Überstromschutzeinrichtung in der Minusleitung;
- Figur 4: einen schematischen Schaltplan des erfindungsgemäßen Akkumulators gemäß einem ersten Ausführungsbeispiel;
- Figur 5: einen schematischen Schaltplan des erfindungsgemäßen Akkumulators gemäß einem zweiten Ausführungsbeispiel;
- Figur 6: einen schematischen Schaltplan des erfindungsgemäßen Akkumulators gemäß einem dritten Ausführungsbeispiel;
- Figur 7: einen schematischen Schaltplan des erfindungsgemäßen Akkumulators gemäß einem vierten Ausführungsbeispiel;
- Figur 8: einen schematischen Schaltplan des erfindungsgemäßen Akkumulators gemäß einem fünften Ausführungsbeispiel; und
- Figur 9: einen schematischen Schaltplan des erfindungsgemäßen Akkumulators gemäß einem sechsten Ausführungsbeispiel.

### Ausführungsbeispiel:

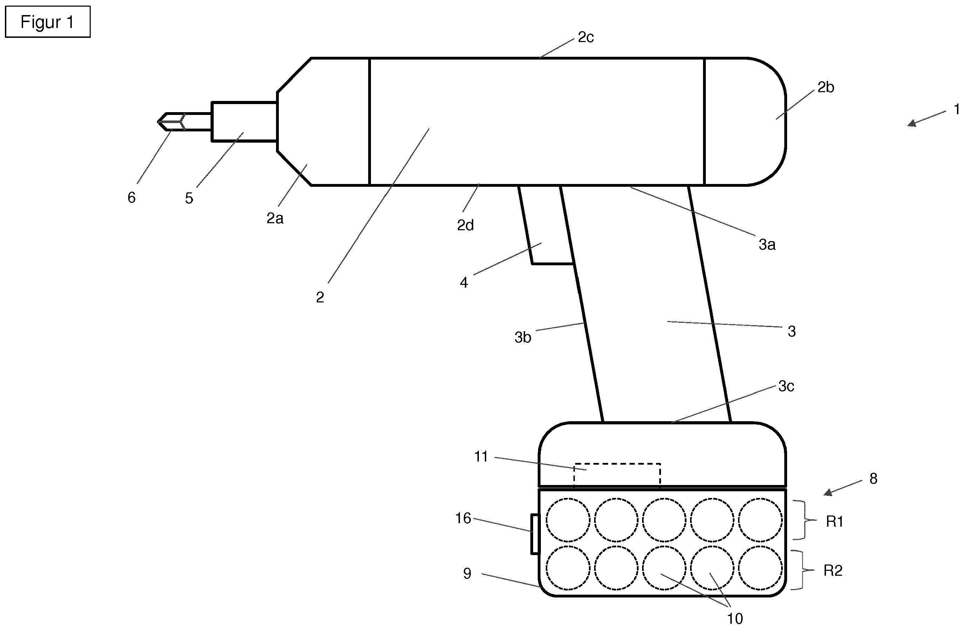

Figur 1 zeigt eine schematisch dargestellte Werkzeugmaschine 1 in Form eines Akkuschraubers. Es ist jedoch auch möglich, dass die Werkzeugmaschine 1 in Form einer Bohrmaschine, einer Säge, eines Winkelschleifers oder dergleichen ausgestaltet ist.

Die als Akkuschrauber ausgestaltete Werkzeugmaschine 1 enthält im Wesentlichen ein Gehäuse 2, in dem ein Antrieb in Form eines Elektromotors, ein Getriebe, eine Abtriebswelle, eine Antriebswelle und eine Steuerung enthalten ist, ein Handgriff 3, einen Betriebsschalter 4 und eine Werkzeugaufnahme 5. Der Antrieb, das Getriebe, die Abtriebswelle, die Antriebswelle und die Steuerung sind in den Figuren nicht dargestellt.

Das Gehäuse 2 enthält dabei ein vorderes Ende 2a, ein hinteres Ende 2b, eine Oberseite 2c und eine Unterseite 2d. An dem vorderen Ende 2a des Gehäuses 2 ist die Werkzeugaufnahme 5 vorgesehen, welche zum Aufnehmen und Halten eines Werkzeugs 6 dient. Das Werkzeug 6 ist hierbei als Schrauberbit ausgestaltet.

Der Handgriff 3 ist mit einem ersten, oberen Ende 3a mit der Unterseite 2d des Gehäuses 2 verbunden. Der Betriebsschalter 4 der Werkzeugmaschine 1 ist an einer Vorderseite 3b des Handgriffs 3 positioniert und dient zum Aktivieren der Werkzeugmaschine 1. An einem zweiten, unteren Ende 3c des Handgriffs 3 ist eine Akkuschnittstelle 7 enthalten. Die Akkuschnittstelle 7 enthält einen Plus- und Minuskontakt und dient zum wiederlösbaren Verbinden eines Akkumulators 8 mit der Werkzeugmaschine 1. Durch den verbundenen Akkumulator 8 kann die Werkzeugmaschine 1 mit elektrischer Energie versorgt werden.

Wie den Figuren 1 bis 3 zu entnehmen ist, enthält der Akkumulator 8 im Wesentlichen ein Gehäuse 9 (auch Akkugehäuse genannt), eine Anzahl an Energiespeicherzellen 10 (auch Akkuzellen genannt), eine Schnittstelleneinrichtung 11, eine Plusleitung 12 (auch Pluspfad, Plusdraht oder Pluskabel genannt), eine Minusleitung 13 (auch Minuspfad, Minusdraht oder Minuskabel genannt) sowie eine Akkusteuerung 14 (auch CMS - Cell Management System genannt).

Die Energiespeicherzellen 10 können in Form von zylindrischen Akkuzellen oder in Form von sogenannten Pouchzellen gestaltet sein.

Die Akkusteuerung 14 ist dabei im Wesentlichen in Form einer Leiterplatte (auch Leiterkarte, Platine, gedruckte Schaltung oder Printed Circuit Board (PCB) genannt).

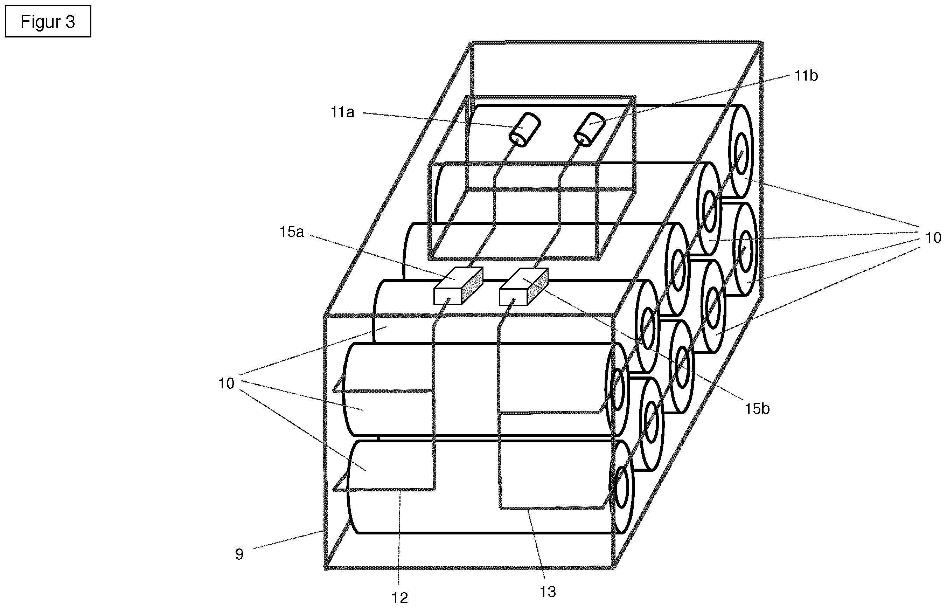

Die Schnittstelleneinrichtung 11 enthält des Weiteren einen Plusanschluss 11a sowie einen Minusanschluss 11b (vgl. Figur 3). Mit Hilfe dieses Plus- und Minusanschlusses 11a, 11b kann die von den Energiespeicherzellen 10 erzeugte Gleichspannung (auch Direct Current "DC" genannt) an eine mit dem Akkumulator 8 verbundene Werkzeugmaschine 1 über deren Plus- und Minuskontakt mit elektrischer Energie versorgt werden. Hierzu ist die Schnittstelleneinrichtung 11 des Akkumulators 8 mit der Akkuschnittstelle 7 der Werkzeugmaschine 1 wiederlösbar verbunden. Der Plus- und Minuskontakt der Werkzeugmaschine 1 ist in den Figuren nicht gezeigt.

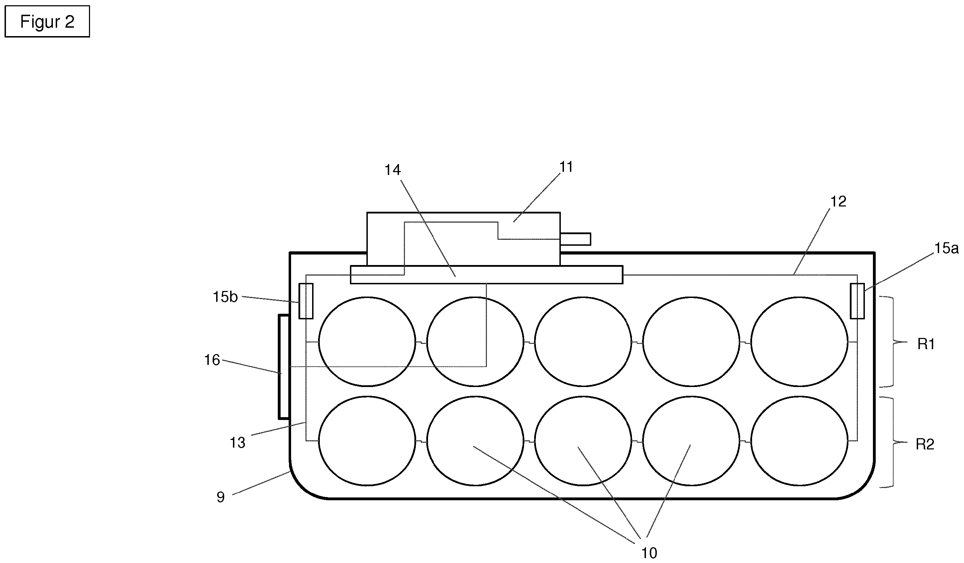

In Figur 2 ist eine seitliche Schnittansicht durch den Akkumulator 8 mit seinen wesentlichen Bestandteilen gezeigt.

Wie bereits vorstehend erwähnt sowie in Figur 2 und 3 gezeigt, enthält der Akkumulator 8 gemäß dem Ausführungsbeispiel in den Figuren eine erste und zweite Reihe R1, R2 an Energiespeicherzellen 10. Die Plus-Pole der jeweiligen Energiespeicherzellen sind durch die Plusleitung 12 mit dem Plusanschluss 11a der Schnittstelleneinrichtung 11 und Minus-Pole der jeweiligen Energiespeicherzellen 10 sind durch die Minusleitung 13 mit dem Minusanschluss 11b der Schnittstelleneinrichtung 11 elektrisch verbunden. Die Energiespeicherzellen 10 der ersten Reihe R1 und die Energiespeicherzellen 10 der zweiten Reihe R2 sind jeweils in Serie (auch seriell) miteinander verbunden. Die erste Reihe R1 an Energiespeicherzellen 10 und die zweite Reihe R2 an Energiespeicherzellen 10 sind wiederum parallel verbunden.

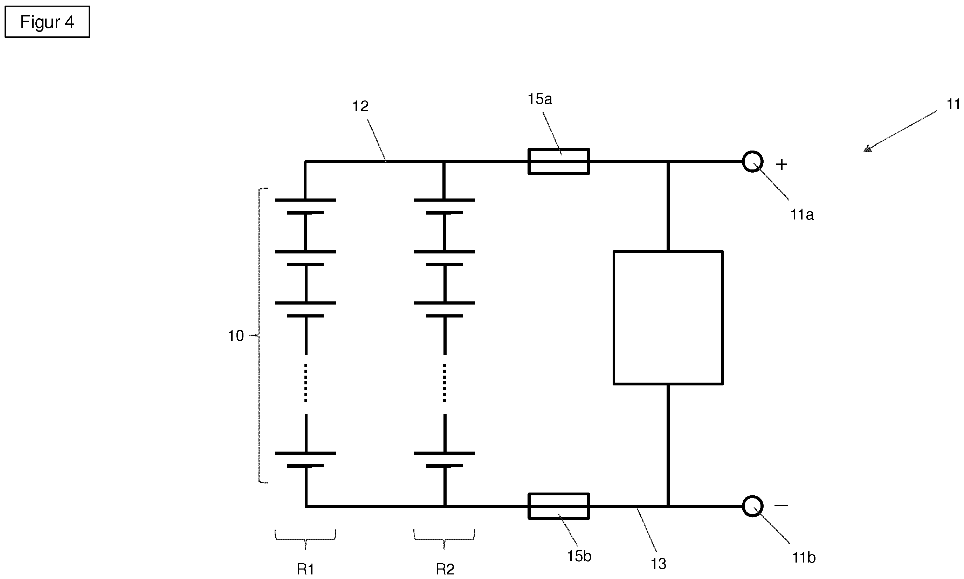

Wie insbesondere in Figur 3 und 4 gezeigt, ist gemäß einem ersten Ausführungsbeispiel des erfindungsgemäßen Akkumulators 8 eine erste Überstromschutzeinrichtung 15a (auch Sicherung genannt) in der Plusleitung 12 und eine zweite Überstromschutzeinrichtung 15b (auch Sicherung genannt) in der Minusleitung 13 positioniert.

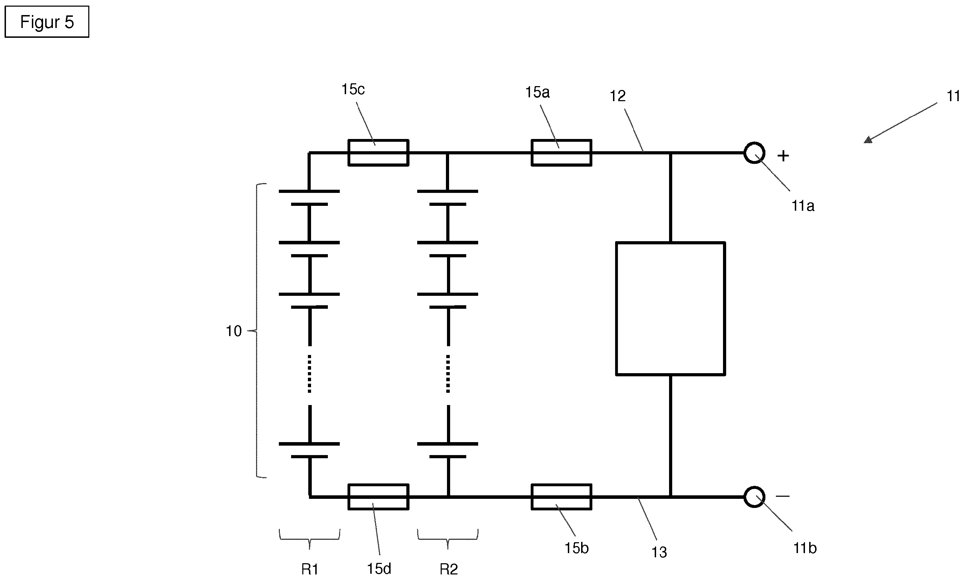

Wie in Figur 5 gezeigt, ist gemäß einem zweiten Ausführungsbeispiel des erfindungsgemäßen Akkumulators 8 eine erste und zweite Überstromschutzeinrichtung 15a, 15c in der Plusleitung 12 sowie eine erste und zweite Überstromschutzeinrichtung 15b, 15d in der Minusleitung 13 positioniert. Die erste sowie zweite Überstromschutzeinrichtung 15a, 15c ist in Serie (seriell) in der Plusleitung 12 und die erste sowie zweite Überstromschutzeinrichtung 15b, 15d ist in Serie in der Minusleitung 13 positioniert. Es ist jedoch auch möglich, dass mehr als jeweils zwei Überstromschutzeinrichtungen 15a, 15b, 15c, 15d in Serie (seriell) in der Plus- oder Minusleitung 12, 13 positioniert sind.

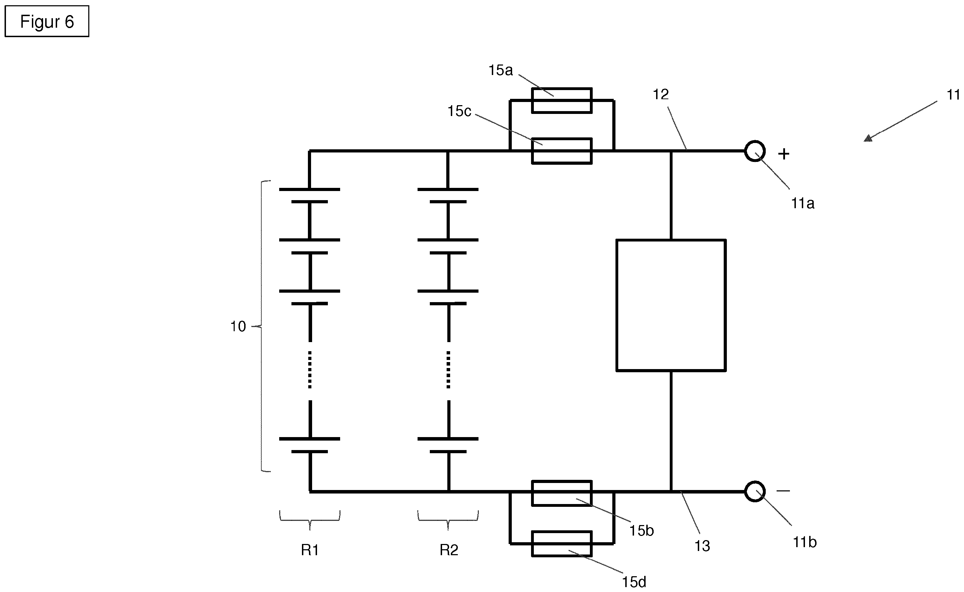

Figur 6 zeigt ein drittes Ausführungsbeispiel des erfindungsgemäßen Akkumulators 8. Im Gegensatz zu dem ersten Ausführungsbeispiel des erfindungsgemäßen Akkumulators 8 ist eine erste und zweite Überstromschutzeinrichtung 15a, 15c parallel in der Plusleitung 12 sowie eine erste und zweite Überstromschutzeinrichtung 15b, 15d parallel in der Minusleitung 13 angeordnet. Gemäß einem weiteren Ausführungsbeispiel des Akkumulators 8 können auch mehr als jeweils zwei Überstromschutzeinrichtung 15a, 15b, 15c, 15d parallel in der Plusleitung 12 und/oder in der Minusleitung 13 positioniert sein.

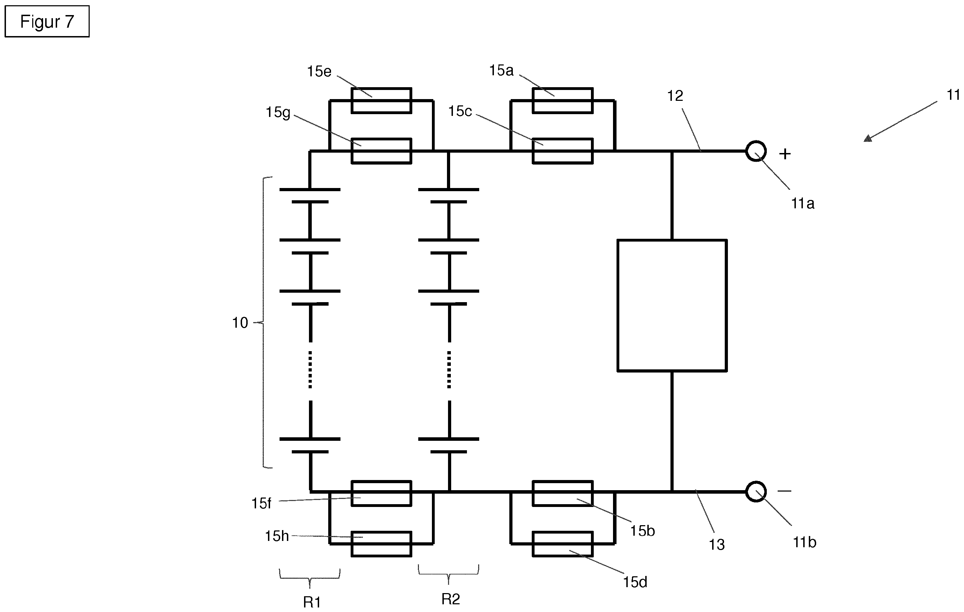

In Figur 7 ist ein viertes Ausführungsbeispiel des erfindungsgemäßen Akkumulators 8 gezeigt. Gemäß diesem vierten Ausführungsbeispiel ist eine erste und zweite Überstromschutzeinrichtung 15a, 15c parallel in der Plusleitung 12 sowie eine dritte und vierte Überstromschutzeinrichtung 15e, 15g parallel in der Plusleitung 12 angeordnet. Darüber hinaus ist eine erste und zweite Überstromschutzeinrichtung 15b, 15d parallel in der Minusleitung 13 sowie eine dritte und vierte Überstromschutzeinrichtung 15f, 15h parallel in der Minusleitung 13 angeordnet.

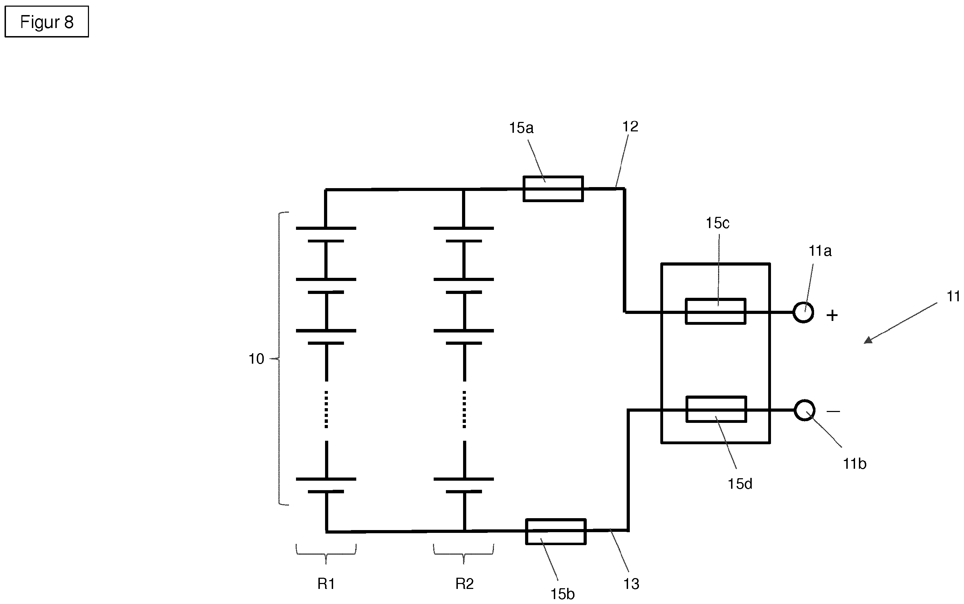

Figur 8 zeigt ein fünftes Ausführungsbeispiel des erfindungsgemäßen Akkumulators 8. Gemäß diesem fünften Ausführungsbeispiel ist eine erste und zweite Überstromschutzeinrichtung 15a, 15c in der Plusleitung 12 sowie eine erste und zweite Überstromschutzeinrichtung 15b, 15d in der Minusleitung 13 positioniert. Wie Figur 8 zu entnehmen ist, ist sowohl die zweite Überstromschutzeinrichtung 15c in der Plusleitung 12 als auch die zweite Überstromschutzeinrichtung 15d in der Minusleitung 13 auf der als Leiterplatte ausgestalteten Akkusteuerung 14 positioniert.

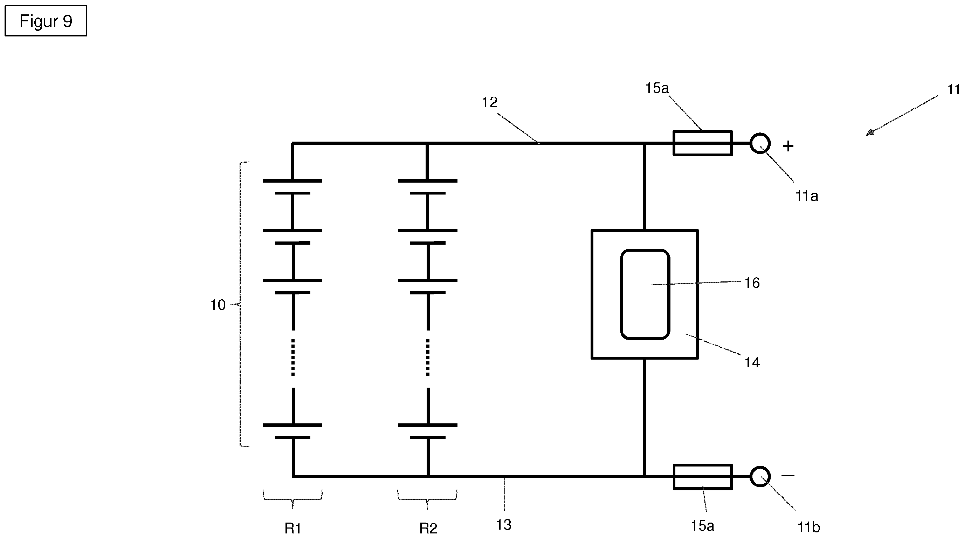

In Figur 9 ist ein sechstes Ausführungsbeispiel des erfindungsgemäßen Akkumulators 8 dargestellt. Entsprechend diesem Ausführungsbeispiel ist eine Überstromschutzeinrichtung 15a in der Plusleitung 12 und eine Überstromschutzeinrichtung 15b in der Minusleitung 13 positioniert. Wie Figur 9 zu entnehmen ist, ist die Überstromschutzeinrichtung 15a in der Plusleitung 12 und die Überstromschutzeinrichtung 15b in der Minusleitung 13 jeweils vor bzw. hinter der Akkusteuerung 14 positioniert. Die Energiespeicherzellen 10 sowie die Akkusteuerung 14 sind in dem Schaltplan in Figur 9 parallel zueinander positioniert. Die Überstromschutzeinrichtung 15a in der Plusleitung 12 und die Überstromschutzeinrichtung 15b in der Minusleitung 13 sind wiederum in Serie (seriell) zu den Energiespeicherzellen 10 sowie der Akkusteuerung 14 geschaltet. Wie Figur 9 des Weiteren zu entnehmen ist, ist die Akkusteuerung 14 mit einer Anzeigeneinrichtung 16 (auch Display genannt) verbunden. An der Anzeigeneinrichtung 16 können Daten und Informationen, die von der Akkusteuerung 14 erzeugt werden, bezüglich der Energiespeicherzellen 10 für einen Anwender des Akkumulators 8 angezeigt werden.

Durch diese serielle Anordnung der Überstromschutzeinrichtungen 15a, 15b zu den Energiespeicherzellen 10 und der Akkusteuerung 14 kann auch im Falle einer Unterbrechung des elektrischen Stromkreises mit Hilfe der Überstromschutzeinrichtungen 15a, 15b die Anzeigeneinrichtung 16 weiterhin mit elektrischer Energie versorgt werden. Hierdurch kann einem Anwender des Akkumulators 8 weiterhin mit Informationen und Daten, insbesondere über die Unterbrechung des Stromkreises des Akkumulators 8 durch eine Überstromschutzeinrichtung 15a, 15b, versorgt werden.

Wie den Figuren 3 bis 9 zu entnehmen ist, ist die Akkusteuerung 14 mit der Plus- und Minusleitung 12, 13 verbunden. Die Akkusteuerung 14 dient unter anderen zur Überwachung der Energiespeicherzellen 10 sowie insbesondere der Kapazität oder des Spannungs- und Stromwertes der Energiespeicherzellen 10.

### Bezugszeichenliste

1: Werkzeugmaschine
2: Gehäuse der Werkzeugmaschine
2a: vorderes Ende des Gehäuses
2b: hinteres Ende des Gehäuses
2c: Oberseite des Gehäuses
2d: Unterseite des Gehäuses
3: Handgriff
3a: oberes Ende des Handgriffs
3b: Vorderseite des Handgriffs
3c: unteres Ende des Handgriffs
4: Betriebsschalter
5: Werkzeugaufnahme
6: Werkzeug
7: Akkuschnittstelle
8: Akkumulator
9: Gehäuse des Akkumulators
10: Energiespeicherzelle
11: Schnittstelleneinrichtung
11a: Plusanschluss
11b: Minusanschluss
12: Plusleitung
13: Minusleitung
14: Akkusteuerung
15a - 15h: Überstromschutzeinrichtung
16: Anzeigeneinrichtung
R1: erste Reihe an Energiespeicherzellen
R2: zweite Reihe an Energiespeicherzellen

## Patentansprüche

1. Akkumulator (8), insbesondere zur Versorgung einer Werkzeugmaschine (1) mit elektrischer Energie, mit einem Gehäuse (2) zum Aufnehmen wenigstens einer Energiespeicherzelle (10) sowie einer Plusleitung (12) und einer Minusleitung (13) zum Verbinden der wenigstens einen Energiespeicherzelle (10) mit einer Schnittstelleneinrichtung,
**dadurch gekennzeichnet, dass** wenigstens eine Überstromschutzeinrichtung (15a, 15b, 15c, 15d, 15e, 15f, 15g) in der Plusleitung (12) oder in der Minusleitung (13) enthalten ist.

2. Akkumulator (8) nach Anspruch 1,
**dadurch gekennzeichnet, dass** wenigstens eine Überstromschutzeinrichtung (15a, 15b, 15c, 15d, 15e, 15f, 15g) sowohl in der Plusleitung (12) als auch in der Minusleitung (13) enthalten ist.

3. Akkumulator (8) nach Anspruch 1 oder 2,
**dadurch gekennzeichnet, dass** wenigstens zwei parallel zueinander angeordnete Überstromschutzeinrichtungen (15a, 15b, 15c, 15d, 15e, 15f, 15g) in der Plusleitung (12) oder in der Minusleitung (13) enthalten sind.

4. Akkumulator (8) nach wenigstens einem der Ansprüche 1 bis 3,
**dadurch gekennzeichnet, dass** die Überstromschutzeinrichtung (15a, 15b, 15c, 15d, 15e, 15f, 15g) als Schmelzsicherung ausgestaltet ist.
